# FASCICULE DE BREVET EUROPEEN

(11) **EP 1 355 215 B1**
(45) Date de publication et mention de la délivrance du brevet: **08.06.2011**
(21) Numéro de dépôt: 03008024.6
(22) Date de dépôt: 11.04.2003
(51) Int. Cl.: G05D 27/02, G05D 7/06, G05D 16/20, B29C 49/78

(54) **Dispositif de régulation du débit et/ou de la pression d'un fluide**
Vorrichtung zum Regeln des Durchflusses und/oder des Druckes eines Fluids
System for controlling the flow and/or the pressure of a fluid

(30) Priorité: 19.04.2002 FR 0204960
(43) Date de publication de la demande: 22.10.2003
(73) Titulaire: Olilab Ltd, North Point Hong Kong (CN)
(72) Inventeur: Dupuis, Alain, 74350 Cruseilles (FR)
(74) Mandataire: Bugnion Genève

(56) Documents cités:
- EP-A- 0 605 743
- EP-A- 0 824 232
- EP-A- 0 919 355
- US-A- 5 146 941

## Description

La présente invention concerne un dispositif de régulation aussi bien du débit que de la pression d'un fluide transféré d'un réservoir à haute pression vers un autre réservoir.

Le US-A-5,146,941 propose un dispositif de régulation du débit d'un gaz vers un dispositif à pression variable, tel qu'un moteur à combustion. Il comprend une vanne réglant le débit associée à un dispositif de commande, et un dispositif mesurant le débit du gaz constitué d'une tuyère de Laval avec une mesure de la perte de charge au col de la tuyère, des capteurs de la pression en amont de la tuyère, de la température en amont ou en aval de la tuyère et un microprocesseur. Le microprocesseur avec un algorithme et les valeurs mesurées calcule le débit réel et indique au dispositif de commande de la vanne la correction à effectuer pour obtenir la valeur de débit souhaitée.

Dans certaines applications, il est important de pouvoir, d'une part, connaître le débit d'un fluide, notamment d'un gaz fourni sous haute pression et, d'autre part, pouvoir réguler ce débit et également la pression en fonction de l'application.

A titre d'exemple non limitatif, si on prend en considération le cas de soufflage des récipients en en polymère tel que du PET, il est important qu'on puisse, par exemple, dans la phase de présoufflage contrôler le débit d'air ensuite, pendant la phase de soufflage de pouvoir contrôler la pression à laquelle est soumis le récipient et, enfin, lors de la détente, contrôler la baisse de pression.

Dans cette application particulière, pouvoir contrôler aussi bien le débit lors du présoufflage que la pression lors du soufflage est une caractéristique très importante car une mauvaise gestion de ces deux paramètres donne des résultats désastreux au niveau de la fabrication des récipients et une perte de matière première.

Le but de la présente invention est de proposer un dispositif de régulation du débit et/ou de la pression d'un fluide transféré d'un réservoir à haute pression vers un autre réservoir.

Le dispositif selon l'invention est défini par la revendication 1.

L'avantage de cette solution simple est d'utiliser la tuyère de Laval qui est un dispositif bien connu dans le domaine pour pouvoir, malgré la haute pression, obtenir un régime laminaire permettant la mesure précise d'une pression différentielle aux bornes de la tuyère pour en déduire le débit avec précision et pouvoir ensuite rétroagir sur les vannes pour régler le débit souhaité ainsi que la pression.

Selon une variante d'exécution, les vannes sont des électrovannes à siège dont la commande est réalisée par un dispositif électromécanique et plus précisément des solénoïdes.

Selon une variante d'exécution, le fluide est un gaz et la pression de travail est comprise en 1 à 100 bars.

L'invention concerne également l'utilisation de ce dispositif dans le cas précis du soufflage d'un polymère tel que du PET, caractérisée par le fait qu'il est utilisé pour gérer trois phases de soufflage d'un corps creux en polymère :
- le présoufflage pendant lequel le système micro-programmé assure la régulation du débit d'air vers le second réservoir à travers un orifice de travail en mesurant la perte de charge aux bornes de la tuyère de Laval et en agissant sur la commande de la première électrovanne,
- le soufflage pendant lequel le système micro-programmé assure la régulation de la pression d'air sur l'orifice de travail relié au second réservoir en se basant sur la lecture de la pression aux bornes de la tuyère de Laval et en agissant sur les deux commandes des électrovannes, et enfin
- la détente, pendant laquelle le système micro-programmé assure la détente progressive de la pression entre l'orifice de travail et l'orifice d'échappement en se basant sur la lecture de la pression aux bornes de la tuyère de Laval et en pilotant la commande électromécanique de la seconde électrovanne.

Selon une variante d'utilisation pendant le présoufflage le débit d'air est synchronisé avec le déplacement de la tige d'étirage en lisant le signal de la position de ladite tige d'étirage.

L'invention sera décrite plus en détail à l'aide des figures annexées.

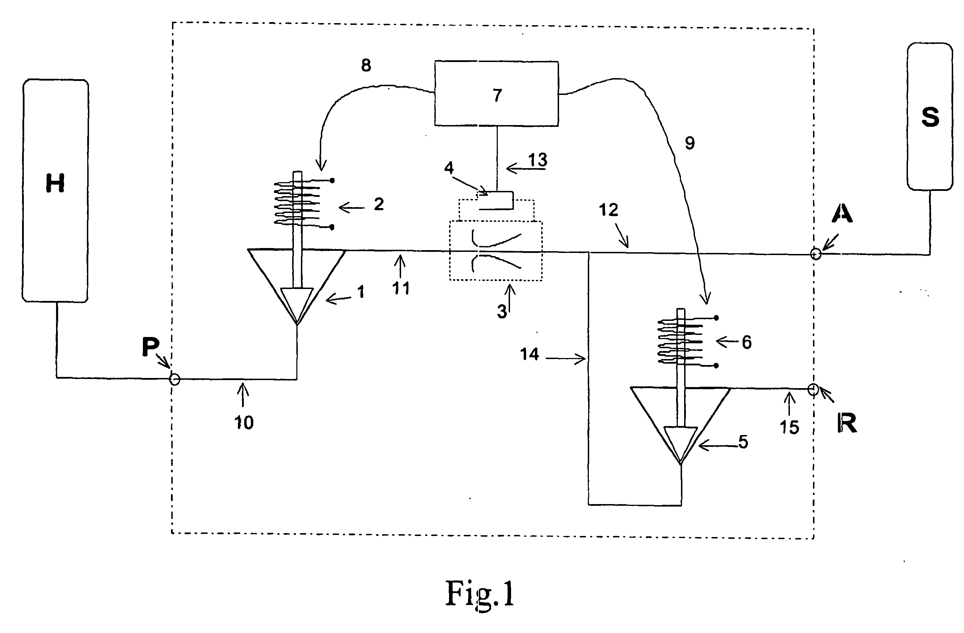

La figure 1 représente schématiquement les éléments principaux d'une installation de soufflage selon l'invention,

La figure 2 représente la même installation avec une synchronisation lors du présoufflage du débit d'air avec la position de la tige d'étirage.

Un réservoir à haute pression H communique à travers un orifice d'alimentation P et une conduite 10, 11, 12 avec un réservoir S à travers un orifice de travail A. Le réservoir S est un corps creux à l'intérieur duquel il sera soufflé une quantité de gaz pour la formation du récipient souhaité. Entre les segments 10 et 11 de la conduite, une électrovanne 1 avec son dispositif de commande 2 est intercalée. Sur le segment 11 une tuyère de Laval 3 avec un capteur de perte de charge 4 sont montés. Entre les segments 11 et 12, une conduite 14 est reliée à une deuxième électrovanne 5 et son dispositif de commande 6, une conduite 15 relie l'autre borne de la vanne 5 à un orifice R d'échappement. Enfin, un système micro-programmé 7 reçoit les informations lues par le capteur de perte de charge et commande à travers les lignes 8 et 9 les éléments de commande électromécaniques 2 et 6 des vannes 1 et 5.

Nous avons entouré d'un trait mixte le dispositif selon l'invention qui correspond physiquement à un corps intégrant les éléments décrits précédemment.

Nous décrirons maintenant brièvement la fabrication des récipients en PET selon les trois phases particulières de leur processus, à savoir le présoufflage, le soufflage et la détente.

Dans la première phase de présoufflage, il est nécessaire d'assurer un débit d'air de l'orifice d'alimentation P vers l'orifice de travail A et ceci est réalisé grâce à la lecture de la perte de charge au moyen du dispositif 4 aux bornes de la tuyère de Laval 3. En fonction de cette lecture, le système micro-programmé 7 commande l'électrovanne 1 afin d'assurer un débit d'air selon un programme préétabli. Lorsque la phase de présoufflage est terminée, on passe à la phase de soufflage pendant laquelle il est important que la pression d'air sur l'orifice de travail A relié au réservoir S soit régulée. Cette régulation est réalisée grâce à la lecture de la pression aux bornes de la tuyère de Laval 3 et au système micro-programmé 7 qui en commandant les deux électrovannes 1 et 5 assure la régulation de cette pression selon un programme préétabli.

Enfin, la phase de la détente dans laquelle la pression dans le réservoir S doit se détendre d'une manière progressive se réalise de manière similaire, à savoir qu'en fonction de la lecture de la pression aux bornes de la tuyère de Laval, le système micro-programmé 7 commande l'ouverture de la vanne 5 ce qui permet de faire baisser la pression à l'intérieur du réservoir S entre les orifices A et R.

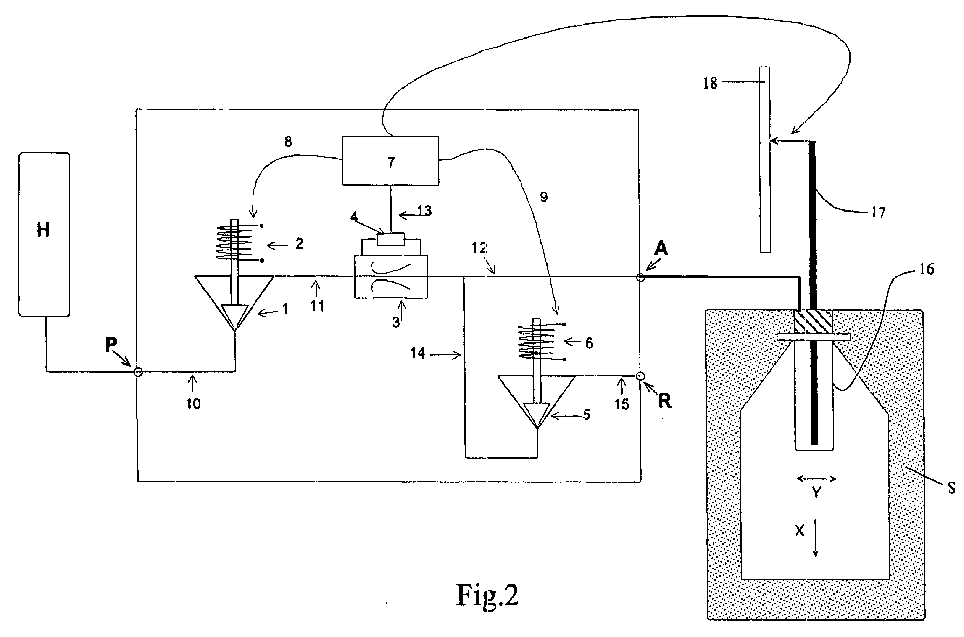

En se referant à la figure 2, on a la même installation que décrite précédemment mais en plus on a introduit la possibilité de synchroniser le débit d'air pendant le présoufflage avec la position de la tige d'étirage 17 de la préforme 16. En effet, il est connu, lors de l'étape de présoufflage d'un polymère tel que du PET, que la préforme 16 en polymère introduite dans le corps creux S est étirée selon la direction X par une tige d'étirage 17 tandis que le gaz soufflé assure l'étirage radial de la préforme. La présente invention propose de synchroniser le débit de gaz pendant le présoufflage en lisant la perte de charge au moyen du dispositif 4 aux bornes de la tuyère de Laval 3 et le signal 18 de position de la tige d'étirage 16. Ces deux lectures permettent une parfaite synchronisation automatisée selon un programme préétabli.

## Revendications

1. Dispositif de régulation aussi bien du débit que de la pression d'un fluide transféré d'un réservoir (H) à haute pression vers un réservoir (S), comprenant une première vanne (1) munie d'une commande (2) montée dans un conduit (10, 11, 12) reliant les deux réservoirs (H, S), une tuyère de Laval (3) située en aval de la première vanne (1) et munie d'un capteur électrique de perte de charge (4) lisant les pressions aux bornes de la tuyère de Laval, une seconde vanne (5) munie d'une commande (6) branchée entre la partie avale de la tuyère de Laval et un orifice d'échappement (R) et enfin un système micro-programmé (7) conçu pour recevoir les valeurs lues par le capteur de perte de charge (4) et piloter les deux commandes (2, 6) des deux vannes (1, 5) afin d'assurer la régulation aussi bien du débit que de la pression du fluide transféré du premier réservoir (H) vers le second réservoir (S).

2. Dispositif selon la revendication 1, **caractérisé par le fait que** lesdites vannes sont des électrovannes à siège et leur dispositif de commande (2, 6) est un dispositif électromécanique.

3. Dispositif selon la revendication 1 ou 2, **caractérisé par le fait que** le fluide est un gaz dont la pression est comprise en 1 et 100 bars.

4. Utilisation du dispositif selon la revendication 3, **caractérisé par le fait qu'**il est utilisé pour gérer trois phases de soufflage d'un corps creux en polymère tel que du PET :
- le présoufflage pendant lequel le système micro-programmé assure la régulation du débit d'air vers le seconde réservoir (S) à travers un orifice de travail (A) en mesurant les pressions aux bornes de la tuyère de Laval (3) et en agissant sur la commande de la première électrovanne (1),
- le soufflage pendant lequel le système micro-programmé (7) assure la régulation de la pression d'air sur l'orifice de travail (A) relié au second réservoir (S) en se basant sur la lecture de la pression aux bornes de la tuyère de Laval (3) et en agissant sur les deux commandes (2, 6) des électrovannes (1, 5), et enfin
- la détente, pendant laquelle le système micro-programmé assure la détente progressive de la pression entre l'orifice de travail (A) et l'orifice d'échappement (R) en se basant sur la lecture de la pression aux bornes de la tuyère de Laval et en pilotant la commande électromécanique (6) de la seconde électrovanne (5).

5. Utilisation selon la revendication 4, **caractérisée par le fait que** pendant le présoufflage le débit d'air est synchronisé avec le déplacement de la tige d'étirage en lisant le signal de la position de ladite tige d'étirage.

## Claims

1. A device for regulating the flow rate and the pressure of a fluid transferred from a highpressure reservoir (H) to a reservoir (S), comprising a first valve (1) provided with a control (2) mounted in a pipe (10, 11, 12) connecting the two reservoirs (H, S), a Laval nozzle (3) located downstream of the first valve (1) and provided with an electric pressure-drop sensor (4) reading the pressure at the terminals of the Laval nozzle, a second valve (5) provided with a control (6) connected between the downstream part of the Laval nozzle and an exhaust orifice (R) and finally a micro-programmed system (7) designed to receive the values read by the pressure-drop sensor (4) and to drive the two controls (2, 6) of the two valves (1, 5) so as to regulate the flow rate and the pressure of the fluid transferred from the first reservoir (H) to the second reservoir (S) .

2. The device as claimed in claim 1, wherein said valves are solenoid seated valves and their control device (2, 6) is an electromechanical device.

3. The device as claimed in claim 1 or 2, wherein the fluid is a gas whose pressure is between 1 and 100 bar.

4. The use of the device as claimed in claim 3, which is used for managing three phases of blow-molding a hollow body made of a polymer such as PET:
preblowing during which the micro-programmed system regulates the flow of air towards the second reservoir (S) through a working orifice (A) by measuring the pressure drop at the terminals of the Laval nozzle (3) and by acting on the control of the first solenoid valve (1), blow-molding
during which the micro-programmed system (7) regulates the air pressure at the working orifice (A) connected to the second reservoir (S) based on the reading of the pressure at the terminals of the Laval nozzle (3) and by acting on the two controls (2, 6) of the solenoid valves (1, 5), and
expansion, during which the micro-programmed system gradually decreases the pressure between the working orifice (A) and the exhaust orifice (R) based on the reading of the pressure at the terminals of the Laval nozzle and by driving the electromechanical control (6) of the second solenoid valve (5).

5. The use as claimed in claim 4, wherein during the preblowing, the flow of air is synchronized with the movement of the stretch rod by reading the signal of the position of said stretch rod.

## Patentansprüche

1. Vorrichtung zum Regeln sowohl der Durchflussmenge als auch des Druckes eines Fluids, welches von einem Hochdruckbehälter (H) in einen anderen Behälter (S) überführt wird, mit einem ersten Ventil (1), das eine Steuerung (2) aufweist und in einer Leitung (10, 11, 12) eingebaut ist, welche die beiden Behälter (H, S) miteinander verbindet, mit einer Lavaldüse (3), die sich stromabwärts des ersten Ventils (1) befindet und mit einem elektrischen Fühler (4) für den Druckverlust ausgestattet ist, welcher den Druck an den Anschlüssen der Lavaldüse ausliest, mit einem zweiten Ventil (5), das eine Steuerung (6) aufweist und in einer Abzweigung zwischen dem Abschnitt stromabwärts der Lavaldüse und einer Auslassöffnung (R) eingebaut ist, und schliesslich mit einem mikroprogrammierten System (7), welches derart ausgebildet ist, dass es die vom Druckverlustfühler (4) ausgelesenen Werte empfängt und die beiden Steuerungen (2, 6) der zwei Ventile (1, 5) ansteuert, um die Regelung sowohl der Durchflussmenge als auch des Druckes des Fluids zu bewirken, welches vom ersten Behälter (H) in den zweiten Behälter (S) strömt.

2. Vorrichtung nach Anspruch 1, **dadurch gekennzeichnet, dass** die genannten Ventile Magnetventile mit Sitz sind, und dass ihre Steuervorrichtung (2, 6) eine elektromechanische Vorrichtung ist.

3. Vorrichtung nach Anspruch 1 oder 2, **dadurch gekennzeichnet, dass** das Fluid ein Gas ist, dessen Druck zwischen 1 und 100 bar liegt.

4. Verwendung der Vorrichtung nach Anspruch 3, **dadurch gekennzeichnet, dass** die Vorrichtung zur Ausführung dreier Phasen von Blasvorgängen zur Blasherstellung eines Hohlkörpers aus einem Polymer, beispielsweise aus PET, dient, nämlich:
eines Vorblasvorganges, bei dem das mikroprogrammierte System die Durchflussmenge von Luft regelt, die durch eine Arbeitsöffnung (A) in den zweiten Behälter (S) strömt, indem die Drücke an den Enden der Lavaldüse (3) gemessen werden und das System auf die Steuerung des ersten Magnetventils (1) einwirkt,
eines Blasvorganges, bei dem das mikroprogrammierte System (7) die Regelung des Luftdrucks an der Arbeitsöffnung (A) besorgt, welche zum zweiten Behälter (S) führt, indem sich das System auf das Einlesen des Druckes an den Enden der Lavaldüse (3) stützt und auf die beiden Steuervorrichtungen (2, 6) der Magnetventile (1, 5) einwirkt, und sodann
eines Entspannungsvorgangs, bei dem das mikroprogrammierte System die stetige Abnahme des Drucks zwischen der Arbeitsöffnung (A) und der Auslassöffnung (R) besorgt, indem sich das System auf das Einlesen des Druckes an den Enden der Lavaldüse stützt und die elektromechanische Steuervorrichtung (6) des zweiten Magnetventils (5) beeinflusst.

5. Verwendung nach Anspruch 4, **dadurch gekennzeichnet, dass** die Durchflussmenge der Luft während des Vorblasvorganges mit der Verschiebung des Ausdehnungsstabs synchronisiert wird, indem das Signal der Position des genannten Ausdehnungsstabs ausgelesen wird.
